# EUROPÄISCHE PATENTANMELDUNG

(11) **EP 1 669 120 A1**
(43) Veröffentlichungstag der Anmeldung: **14.06.2006**
(21) Anmeldenummer: 05024757.6
(22) Anmeldetag: 12.11.2005
(51) Int. Cl.: B01D 19/04, D21H 21/12, C11D 3/00

(54) **Verfahren zum Entschäumen einer Zusammensetzung**

(30) Priorität: 26.11.2004 DE 102004057417
(71) Anmelder: AQUANOVA German Solubilisate Technologies (AGT) GmbH, 64295 Darmstadt (DE)
(72) Erfinder: Behnam, Dariush, 64380 Roßdorf (DE)
(74) Vertreter: Blumbach - Zinngrebe

(57) **Zusammenfassung**

Beschrieben wird ein Verfahren zum Entschäumen einer Zusammensetzung mit einem Wachs, vornehmlich natürlichen Ursprungs, wobei das Wachs der auf die Schmelztemperatur des Wachses erwärmten Zusammensetzung zugegeben wird.

## Beschreibung

Bei der Herstellung von Lebensmitteln, insbesondere wasserenthaltende Produkte, wie Getränke, die aufgrund ihrer Zusammensetzung Emulgatoren beinhalten, stellt die Schaumbildung in der Produktion und in dem Abfüllungsprozess ein Problem dar.

Bekannt ist, dass Emulgatoren, insbesondere Polysorbate, für die intensive Schaumbildung verantwortlich sind und so zum Beispiel bei der Abfüllung polysorbathaltiger Drinks das Tempo der Abfüllprozesse moderner Abfüllanlagen stark negativ beeinträchtigen.

Außer einem auf dem Markt erhältlichen Entschäumungsmittel, wie eine 10 %ige Lösung von E 471 (eine Mischung von Mono-, Di- und Triestern des Glycerins von Speisefetten) in Ethanol (mit relativ geringer Wirksamkeit), sind bisher kaum wirklich wirksame Entschäumer bekannt.

Der oben genannte Entschäumer ist jedoch sehr kurz haltbar (bei 10 - 20°C sechs Monate) und ist darüber hinaus relativ teuer.

Der Erfindung liegt daher die Aufgabe zu Grunde, eine wirksame, lange haltbare und preisgünstige Alternative vorzuschlagen.

Dazu sieht die Erfindung ein Entschäumungsmittel vor, welches aus einem Wachs vornehmlich natürlichen Ursprungs besteht, wobei das Wachs einer auf die Schmelztemperatur des Waches erwärmten Zusammensetzung zugegeben ist. Als für die erstrebte Wirkung besonders günstig erweisen sich Bienenwachs Cera alba, oder, wenn eine leichte Verfärbung der Zusammensetzung irrelevant ist, Cera flava, oder auch Candellilawachs. Zweckmäßig ist das Wachs in der Zusammensetzung nur in geringem Anteil von beispielsweise etwa 0,3 Gew% bis etwa 0,6 Gew% enthalten. Besonders wirksam ist die Erfindung in Zusammensetzungen, die einen wesentlichen Anteil eines Emulgators wie beispielsweise ein Polysorbat, wie etwa Polysorbat 20 oder Polysorbat 80, enthält.

Die Erfindung sieht ferner ein Verfahren zur Herstellung des Entschäumungsmittels in der Weise vor, dass ein Wachs vornehmlich natürlichen Ursprungs einer auf die Schmelztemperatur des Wachses erwärmten Zusammensetzung zugegeben und bis zur Auflösung des Wachses in der Zusammensetzung gerührt und die Mischung aus Wachs und Zusammensetzung unter fortgesetztem Rühren auf Raumtemperatur (etwa 20° C) abgekühlt wird. Das Verfahren wird beschleunigt, wenn das bereits verflüssigte Wachs in die temperierte Zusammensetzung gegeben wird. Vorteilhaft ist die Verwendung von Cera alba und eine Erwärmung der Zusammensetzung auf etwa 70° C.

Im Übrigen sind bevorzugte Ausführungsformen der Erfindung in den Unteransprüchen angegeben. Nachstehend wird die Erfindung anhand von Beispielen näher erklärt.

### Beispiel 1

Polysorbat 80 wird mit Cera alba in Anteilen 0,0 %, 0,3 %, 0,4 % und 0,6 % bei einer Temperatur von rund 70 °C so lange verrührt, bis sich die Wachsplättchen im Polysorbat vollständig aufgelöst haben. Die Mischung aus Polysorbat und Cera alba wird unter ständigem Rühren langsam auf Raumtemperatur abgekühlt. Die während des Rührens auftretende Schaumbildung und ihre Charakteristik sind in Spalten 1 bis 4 der Zeile 1 von Tabelle 1 eingetragen.

Sodann werden etwa 1 g der Polysorbatmischung mit Cera alba in 1 Liter stilles Trinkwasser aus der öffentlichen Trinkwasserversorgung eingerührt und die Schaumrückbildung in Spalte 5, Tabelle 1, eingetragen.

Schließlich wird in 1 Liter des wie vorstehend angegebenen mit der Polysorbatmischung versetzten Trinkwassers etwa 7 g gasförmiges CO₂ eingeleitet. Die zeitliche Schaumrückbildung ist in Spalte 6, Tabelle 1, eingetragen.

### Beispiel 2

Es wird wie in Beispiel 1 angegeben vorgegangen und gemessen, jedoch wird das Polysorbat 80 durch ein Solubilisat ersetzt, welches aus 20 Gew% Vitamin E und 80 Gew% Polysorbat 20 besteht.

Die Ergebnisse sind in Zeile 2 der Tabelle 1 eingetragen. Der nicht aufgeführte Cera alba-Zusatz von 0,6 Gew% zeitigt gleiche Resultate wie ein Zusatz von 0,4 Gew%.

### Beispiel 3

Es wird wieder wie in Beispiel 1 im Einzelnen angegeben vorgegangen. Als Vergleich wird jedoch Polysorbat 80 durch das Produkt E 230 Clear der ADM ersetzt, welches 66 % Polysorbat 60 sowie 17 % Vitamin E und 17 % Ethanol enthält. Der Cera alba-Anteil betrug 0,0 %. Ferner wurden abweichend von Beispiel 1 für die Spalten 5 und 6 in Tabelle 1, Zeile3, 1,176 g von E 230 Clear mit 1 Liter Trinkwasser verrührt.

Die Tabelle 2 zeigt einen Vergleich der Wirkung des handelsüblichen Entschäumungsmittels E 471 (10 mg Zusatz zu 1 Liter Wasser) mit derjenigen von Cera alba 0,4 Gew% aus Tabelle 1, Zeile 2, anhand des Beispiels 2, nämlich einem Zusatz von 1 g Solubilisat zu 1 Liter Trinkwasser einerseits (Spalten 2 und) sowie zu 1 Liter Trinkwasser mit der erwähnten CO₂-Carbonisierung (Spalten 3 und 5).

Man erkennt die Überlegenheit der Erfindung gegenüber dem bekannten Entschäumungsmittel. Die geringfügig vergrößerte Viskosität von das erfindungsgemäße Entschäumungsmittel enthaltenden Getränken ist subjektiv nicht wahrnehmbar und daher unbeachtlich.

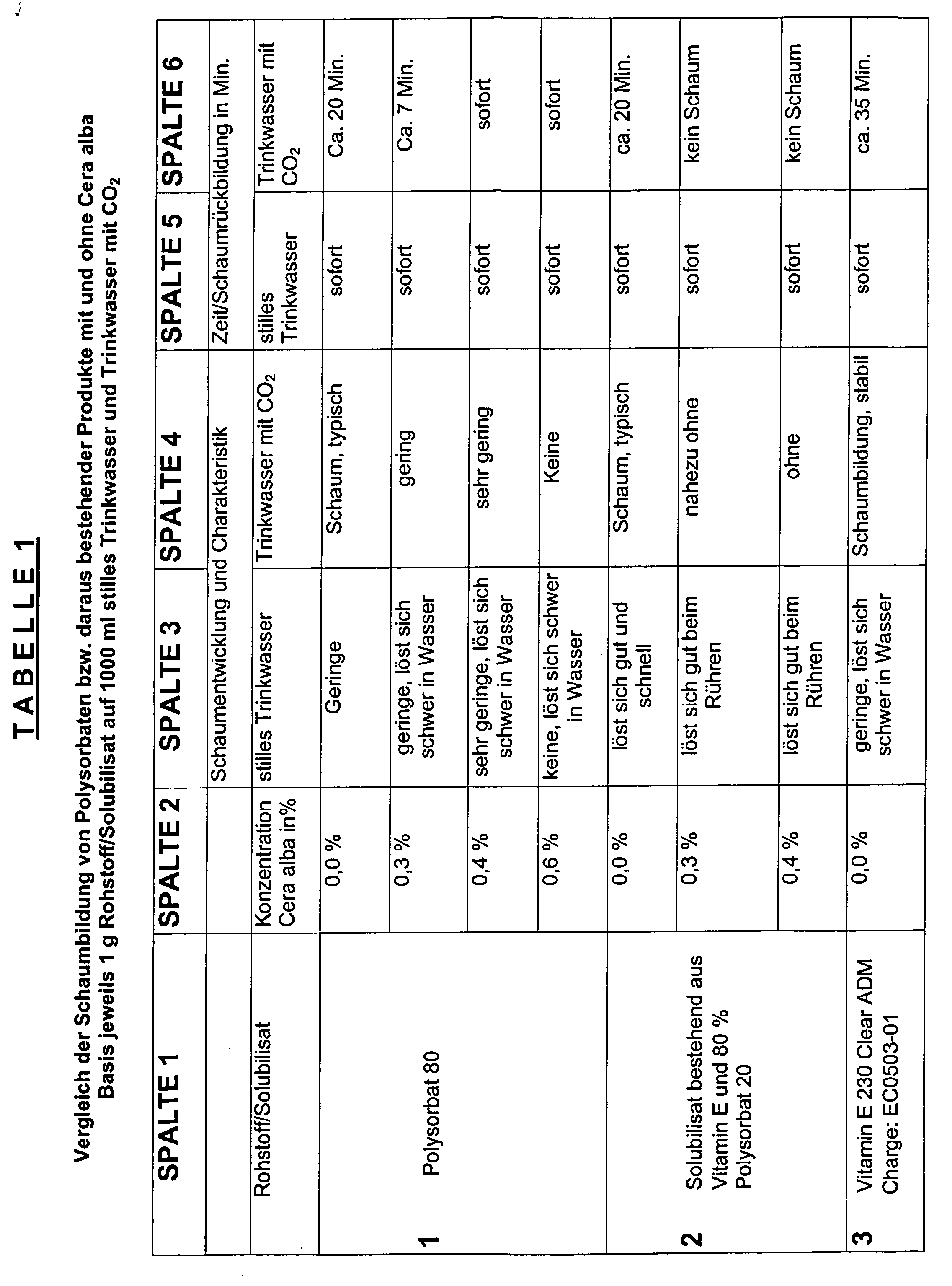

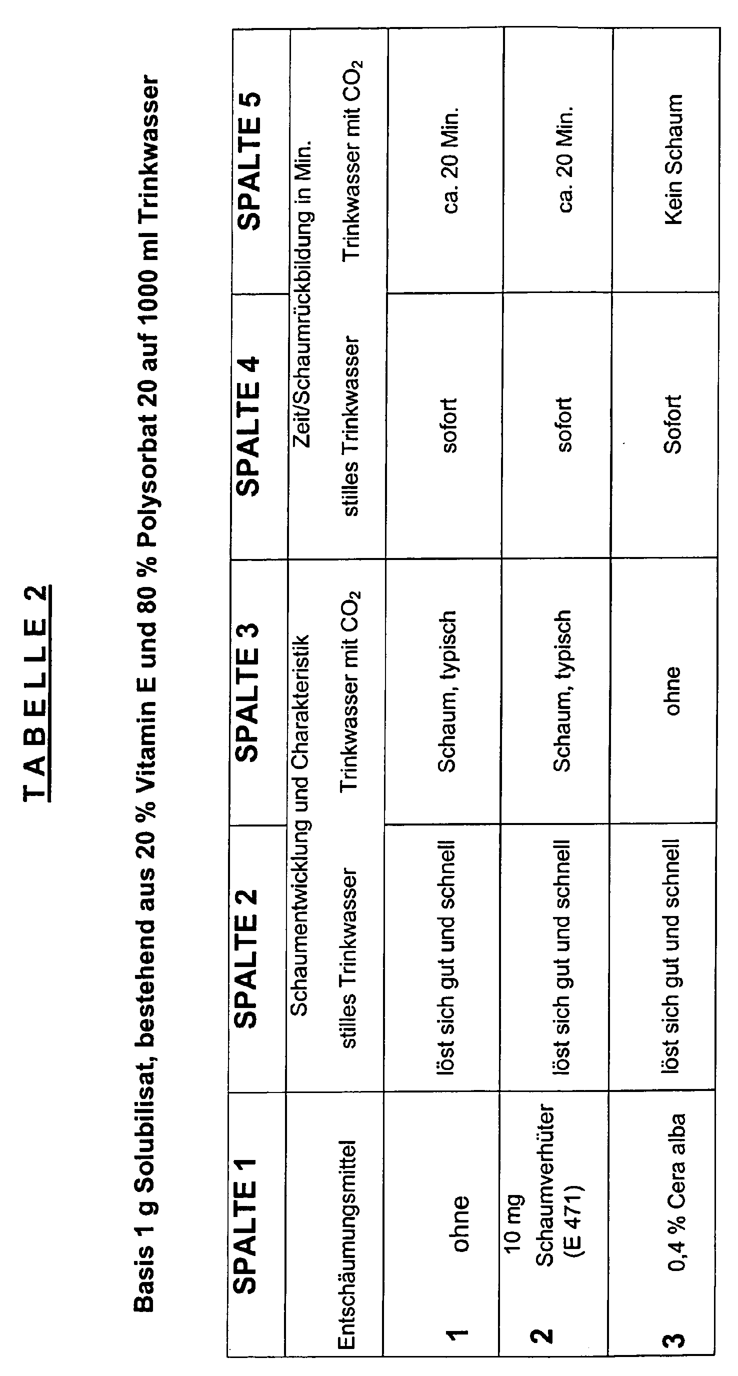

## Patentansprüche

1. Verfahren zum Entschäumen einer Zusammensetzung mit einem Wachs, vornehmlich natürlichen Ursprungs, wobei das Wachs der auf die Schmelztemperatur des Wachses erwärmten Zusammensetzung zugegeben wird.

2. Verfahren nach Anspruch 1, bei welchem die Mischung aus Wachs und Zusammensetzung bis zur Auflösung des Wachses in der Zusammensetzung gerührt und die Mischung unter fortgesetztem Rühren auf Raumtemperatur abgekühlt wird.

3. Verfahren nach Anspruch 1 oder 2, bei dem Bienenwachs, Cera alba, Cera flava oder Candellilawachs eingesetzt wird.

4. Verfahren nach einem der vorstehenden Ansprüche, bei dem Cera alba und/oder Cera flava der Zusammensetzung, Lebensmitteln und/oder Nahrungsmitteln in geringem Anteil zugesetzt wird.

5. Verfahren nach einem der vorstehenden Ansprüche, bei dem etwa 0,3 Gew% bis etwa 0,6 Gew% des Wachses der Zusammensetzung zugegeben wird.

6. Verfahren nach einem der vorstehenden Ansprüche, wobei die Zusammensetzung einen wesentlichen Anteil eines Emulgators enthält.

7. Verfahren nach Anspruch 6, bei welchem der Emulgator mit einem HLB-Wert zwischen 8 und 18 beispielsweise ein Polysorbat wie etwa Polysorbat 20 oder Polysorbat 80 verwendet wird.

8. Verfahren nach einem der vorstehenden Ansprüche, bei welchem etwa 1 g der Zusammensetzung etwa 1 Liter Wasser, gegebenenfalls in karbonisierter Form, zugesetzt wird.

9. Verfahren nach einem der vorstehenden Ansprüche, bei dem der temperierten Zusammensetzung verflüssigtes Wachs zugesetzt wird.

10. Verfahren nach einem der vorstehenden Ansprüche, bei dem die Zusammensetzung auf etwa 70 °C erwärmt wird.

11. Verfahren nach einem der vorstehenden Ansprüche, bei dem als Zusammensetzung ein Solubilisat, bestehend aus einem Emulgator, Vitaminen und Cera alba und/oder Cera flava und/oder Candellilawachs eingesetzt wird.

12. Verfahren nach Anspruch 11, bei dem ein Solubilisat, bestehend aus etwa 80% Polysorbat 20 und etwa 20 % Tocopherol, wie z. B. α-Tocopherol, DLα-Tocopherol, Vitamin E und/oder Mischtocopherol und Cera alba und/oder Cera flava und/oder Candellilawachs eingesetzt werden.

13. Verwendung eines Wachses vornehmlich natürlichen Ursprungs wie etwa Cera alba, Cera flava oder Candellilawachs als Mittel zur Entschäumung von Zusammensetzungen.
